# EUROPÄISCHE PATENTANMELDUNG

(11) **EP 2 975 827 A1**
(43) Veröffentlichungstag der Anmeldung: **20.01.2016**
(21) Anmeldenummer: 14177474.5
(22) Anmeldetag: 17.07.2014
(51) Int. Cl.: H04L 29/12

(54) **Verfahren zur Konfiguration von Kommunikationsgeräten eines industriellen Kommunikationsnetzes und Kommunikationsgerät**

(71) Anmelder: Siemens Aktiengesellschaft, 80333 München (DE)
(72) Erfinder: Albrecht, Harald, 90475 Nürnberg (DE); Mehn, Martin, 91074 Herzogenaurach (DE); Plonka, Reiner, 90768 Fürth (DE)

(57) **Zusammenfassung**

Zur Konfiguration von Kommunikationsgeräten eines industriellen Kommunikationsnetzes werden erste Konfigurationsinformationen für die Kommunikationsgeräte mittels Routerbekanntgabe-Nachrichten durch zumindest einen Router innerhalb eines Teilnetzes an vom jeweiligen Teilnetz umfasste Kommunikationsgeräte übermittelt. Die ersten Konfigurationsinformationen umfassen Steuerungsinformationen mit Angaben über zweite Konfigurationsinformationen, die durch zumindest einen Konfigurationsserver bereitgestellt werden. Mittels Kommunikationsgeräte- oder Router-seitiger Diagnoseeinheiten wird überprüft, ob die ersten Konfigurationsinformationen innerhalb des jeweiligen Teilnetzes zueinander konsistente Steuerungsinformationen umfassen. Bei einem Vorliegen inkonsistenter Steuerungsinformationen werden die Kommunikationsgeräte entsprechend ersten Konfigurationsinformationen konfiguriert, die durch zumindest einen vor Vorliegen der inkonsistenten Steuerungsinformationen für eine Konfiguration maßgeblichen Router übermittelt werden.

## Beschreibung

In verteilten industriellen Automatisierungssystemen ist bei einer Erfassung, Auswertung und Übermittlung von Mess- und Steuerungsdaten sicherzustellen, dass vollständige und unveränderte Daten insbesondere bei zeitkritischen industriellen Produktionsprozessen in Echtzeit vorliegen. Absichtliche, unabsichtliche oder durch einen technischen Fehler bedingte Veränderungen sind zu vermeiden.

Üblicherweise umfasst ein industrielles Automatisierungssystem eine Vielzahl von industriellen Automatisierungsgeräten, die über ein industrielles Kommunikationsnetz miteinander vernetzt sind und im Rahmen einer Fertigungs- oder Prozessautomatisierung zur Steuerung oder Regelung von Anlagen, Maschinen bzw. Geräten dienen. Aufgrund zeitkritischer Rahmenbedingungen in technischen Systemen, die mittels industrieller Automatisierungsgeräte automatisiert sind, werden in industriellen Kommunikationsnetzen zur Kommunikation zwischen Automatisierungsgeräten überwiegend Echzeit-Kommunikationsprotokolle, wie PROFINET, PROFIBUS oder Real-Time-Ethernet, verwendet.

Äußerst problematisch sind Unterbrechungen von Kommunikationsverbindungen zwischen Rechnereinheiten eines industriellen Automatisierungssystems oder industriellen Automatisierungsgeräten, da dies neben einem Informationsverlust beispielsweise zu einer unerwünschten oder unnötigen Wiederholung einer Übermittlung einer Dienstanforderung führen kann. Hierdurch wird eine zusätzliche Auslastung von Kommunikationsverbindungen des industriellen Automatisierungssystems verursacht, was zu weiteren Systemstörungen oder -fehlern führen kann. Darüber hinaus können nicht oder nicht vollständig übermittelte Nachrichten beispielsweise einen Übergang oder Verbleib eines industriellen Automatisierungssystems in einen sicheren Betriebszustand verhindern. Im ungünstigsten Fall kann es zu einem Ausfall einer kompletten Produktionsanlage und zu einem kostspieligen Produktionsstillstand kommen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Aus US 2005 0041671 A1 ist ein Kommunikationssystem mit zumindest einem ersten und zweiten Router bekannt, bei dem der zweite Router zumindest ein IPv6-Präfix vom ersten Router anfordert. Dabei umfasst der erste Router eine Speichereinheit für IPv6-Präfixe, von denen zumindest ein IPv6-Präfix auf Anforderung des zweiten Routers bekanntgegeben wird. Der zweite Router umfasst eine Einheit zur Erzeugung eines weiteren IPv6-Präfixes auf Basis des durch den ersten Router bekanntgegebenen IPv6-Präfixes. Das weitere IPv6-Präfix wird von einem an den zweiten Router angeschlossenen Kommunikationsgerät zur Erzeugung einer IPv6-Adresse verwendet und hierzu durch den zweiten Router bekanntgegeben.

US 8 194 661 B2 offenbart ein Verfahren zur automatischen Konfiguration eines Kommunikationsgeräts innerhalb eines segmentierten Kommunikationsnetzes, bei dem durch eine Überwachungseinheit überprüft wird, ob ein empfangenes IPv6-Datenpaket eine Router-Bekanntgabe (Router Advertisement) oder eine Router-Abfrage (Router Solicitation) umfasst. Im Fall einer Router-Abfrage wird eine MAC-Absender-Adresse des Datenpakets durch die Überwachungseinheit aus dem IPv6-Datenpaket entfernt. Außerdem wird durch die Überwachungseinheit eine externe MAC-Adresse in das IPv6-Datenpaket eingefügt, um dieses als Multicast-Nachricht an einem Router weiterzuleiten. Bei einer Router-Bekanntgabe entfernt die Überwachungseinheit eine MAC-Router-Adresse aus dem IPv6-Datenpaket und fügt stattdessen eine interne MAC-Adresse in das IPv6-Datenpaket ein, um dieses als Unicast-Nachricht an das zu konfigurierende Kommunikationsgerät weiterzuleiten.

In US 8 054 839 B2 ist ein Verfahren zur automatischen Konfiguration von IPv6-Kommunikationsnetzadressen im Sinn einer Stateful Address Auto-configuration Protocol entsprechend Dynamic Host Configuration Protocol, Version 6 (DHCPv6) beschrieben. Dabei wird eine Betriebsart eines DHCPv6-Client entsprechend Flags eingestellt, die von Router Advertisements umfasst sind. Zu diesen Flags zählen beispielsweise O-Flags (Other Configuration Flags) und M-Flags (Managed Flags). Für erfasste und verarbeitete Flags wird eine Tabelle erstellt, anhand der bei einem Router Advertisement mit einem gesetzten M-Flag und einem gesetzten O-Flag überprüft wird, ob für den jeweiligen Router in der Tabelle bereits ein Eintrag vorhanden ist. Bei einem bereits vorhandenen Eintrag wird für die dem jeweiligen Router zugeordneten Flags ein Zähler angepasst.

Aus der älteren europäischen Patentanmeldung mit dem Anmeldeaktenzeichen 14166194.2 ist ein Verfahren zur Konfiguration eines Kommunikationsgeräts innerhalb eines industriellen Automatisierungssystems bekannt, bei dem eine Konfigurationseinheit des Kommunikationsgeräts ein Datagramm mit einer Konfigurationsanforderung an einen Konfigurationsserver übermittelt. Der Konfigurationsserver weist dem Kommunikationsgerät auf die Konfigurationsanforderung zumindest einen ersten topologischen Gerätenamensbestandteil zu, der einer räumlichen oder hierarchischen Anordnung des Konfigurationsservers zugeordnet ist. Durch jede weiterleitende Verteilereinheit wird ein weiterer topologischer Gerätenamensbestandteil ergänzt, der einer räumlichen oder hierarchischen Anordnung der jeweiligen weiterleitenden Verteilereinheit zugeordnet ist. Die Konfigurationseinheit des Kommunikationsgeräts erzeugt aus den topologischen Gerätenamensbestandteilen und einem innerhalb seines Teilnetzes eindeutigen Namensbestandteil dessen Gerätenamen.

Grundsätzlich bietet IPv6 für eine Vorkonfigurierung von innerhalb eines industriellen Kommunikationsnetzes zu betreibenden Automatisierungsgeräten und Serienmaschinen, die jeweils mehrere gleichartige Maschinen innerhalb eines Subnetzes umfassen, bereits gute Grundlagen. Beispielsweise können sich Kommunikationsgeräte anhand von mittels Routerbekanntgabe-Nachrichten (Router Advertisements) oder Konfigurationsservern entsprechend DHCPv6 verbreiteten Konfigurationsinformationen weitestgehend selbständig für einen Datenaustausch innerhalb eines IPv6-Kommunikationsnetzes konfigurieren. Probleme entstehen jedoch, wenn Teilnetze über mehrere Default-Router gleichzeitig an ein überlagertes Teilnetz angekoppelt sind. In derartigen Fällen kann es dazu kommen, dass durch die Default-Router zueinander nicht konsistente Konfigurationsinformationen innerhalb des jeweiligen Teilnetzes verbreitet werden. Dies kann zu instabilen bzw. fehlerhaften Adress- und Gerätekonfigurationen führen.

Der vorliegenden Erfindung liegt daher die Aufgabe zugrunde, ein Verfahren zur Konfiguration von Kommunikationsgeräten anzugeben, mit dem ein instabiler bzw. fehlerhafter Netzbetrieb der Kommunikationsgeräte auch bei durch mehrere Router bzw. Konfigurationsserver konkurrierend verbreiteten, inkonsistenten Konfigurationsinformationen vermieden werden kann, sowie ein geeignetes Kommunikationsgerät zur Durchführung des Verfahrens anzugeben.

Diese Aufgabe wird erfindungsgemäß durch ein Verfahren mit den in Patentanspruch 1 angegebenen Merkmalen und durch ein Kommunikationsgerät mit den in Patentanspruch 8 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zur Konfiguration von Kommunikationsgeräten eines industriellen Kommunikationsnetzes werden erste Konfigurationsinformationen für die Kommunikationsgeräte mittels Routerbekanntgabe-Nachrichten durch zumindest einen Router innerhalb eines Teilnetzes an vom jeweiligen Teilnetz umfasste Kommunikationsgeräte übermittelt. Dabei umfassen die ersten Konfigurationsinformationen Steuerungsinformationen mit Angaben über zweite Konfigurationsinformationen, die durch zumindest einen Konfigurationsserver bereitgestellt werden. Die Kommunikationsgeräte umfassen jeweils eine Konfigurationseinheit, deren Betriebsart entsprechend empfangener Steuerungsinformationen eingestellt wird. Darüber hinaus konfigurieren sich die Kommunikationsgeräte selbständig in Abhängigkeit von der Betriebsart ihrer Konfigurationseinheit entsprechend empfangenen ersten bzw. zweiten Konfigurationsinformationen zumindest hinsichtlich Kommunikationsnetzadresse und Domänennamensserver.

Erfindungsgemäß wird mittels Kommunikationsgeräte- oder Router-seitiger Diagnoseeinheiten überprüft, ob die ersten Konfigurationsinformationen innerhalb des jeweiligen Teilnetzes zueinander konsistente Steuerungsinformationen umfassen. Ein Vorliegen inkonsistenter Steuerungsinformationen wird jeweils Kommunikationsgeräte- oder Router-seitig signalisiert bzw. protokolliert. Bei einem Vorliegen inkonsistenter Steuerungsinformationen werden die Kommunikationsgeräte darüber hinaus entsprechend ersten Konfigurationsinformationen konfiguriert, die durch zumindest einen vor Vorliegen der inkonsistenten Steuerungsinformationen für eine Konfiguration maßgeblichen Router übermittelt werden.

Die vorliegende Erfindung ermöglicht ein automatisches Erkennen von Konfigurationsproblemen, ohne dass hierzu ein Benutzereingriff erforderlich ist. Aufgrund einer entsprechenden Signalisierung bzw. Protokollierung sind durch inkonsistente Steuerungsinformationen hervorgerufene Konfigurationsprobleme schnell und eindeutig detektierbar. Damit können Problembehebungsmaßnahmen zeitnah und zielgerichtet eingeleitet werden. Darüber hinaus wird ein instabiler bzw. fehlerhafter Netzbetrieb von Kommunikationsgeräten durch ein Festschreiben der Konfiguration des jeweiligen Kommunikationsgeräts entsprechend einem zuverlässigen Betriebszustand vor Störungseintritt vermieden. Dies gilt selbst für eine Phase, während der durch mehrere Default-Router zueinander widersprüchliche Konfigurationsinformationen verbreitet werden.

Entsprechend einer vorteilhaften Ausgestaltung der vorliegenden Erfindung sind die Diagnoseeinheiten Kommunikationsgeräte-seitig vorgesehen. In diesem Fall steuert die Diagnoseeinheit des jeweiligen Kommunikationsgeräts die Betriebsart der Konfigurationseinheit des Kommunikationsgeräts. Dies erlaubt eine besonders wirksame Verhinderung eines gestörten Netzbetriebs.

Während des Vorliegens inkonsistenter Steuerungsinformationen werden vorzugsweise zur Konfiguration des jeweiligen Kommunikationsgeräts keine anderen Routerbekanntgabe-Nachrichten als diejenigen ausgewertet, die dem zumindest einen vor Vorliegen der inkonsistenten Steuerungsinformationen für eine Konfiguration maßgeblichen Router zugeordnet sind. Somit werden Routerbekanntgabe-Nachrichten von Routern, die zu einer Inkonsistenz beitragen bzw. diese verursachen, gezielt und vorbeugend ausgeblendet, so dass keine weiteren Folgebelastungen hervorgerufen werden.

Die Routerbekanntgabe-Nachrichten sind vorzugsweise entsprechend Internet Control Message Protocol, Version 6 übermittelte Router Advertisements, die ein M-Flag und ein O-Flag umfassen, die als Steuerungsinformationen durch die Diagnoseeinheiten zur Konsistenzüberprüfung ausgewertet werden. Durch das M-Flag wird beispielsweise gekennzeichnet, dass durch einen Konfigurationsserver entsprechend Dynamic Host Configuration Protocol, Version 6 zweite Konfigurationsinformationen, die ein Präfix für die Kommunikationsgeräte zur Bildung von Kommunikationsnetzadressen entsprechend Internet Protocol, Version 6 umfassen, an die Kommunikationsgeräte bereitgestellt werden.

Entsprechend einer weiteren Ausgestaltung der vorliegenden Erfindung konfigurieren sich die Kommunikationsgeräte bei einem nicht gesetzten M-Flag hinsichtlich ihrer Kommunikationsnetzadressen selbständig anhand der ersten Konfigurationsinformationen. Dabei umfassen die Router Advertisements als erste Konfigurationsinformationen ein Präfix, das von den Kommunikationsgeräten zur Bildung ihrer jeweiligen Kommunikationsnetzadresse entsprechend Internet Protocol, Version 6 für eine Stateless Address Autoconfiguration verwendet wird. Darüber hinaus kann durch das O-Flag gekennzeichnet werden, dass durch einen Konfigurationsserver entsprechend Dynamic Host Configuration Protocol, Version 6 zweite Konfigurationsinformationen, die Angaben über einen Domänennamensserver umfassen, an die Kommunikationsgeräte bereitgestellt werden. Damit sind alle typischen Anwendungsfälle für eine Bereitstellung von Konfigurationsinformationen für Kommunikationsgeräte durch Default-Router bzw. DHCPv6-Server abgedeckt, insbesondere Stateless Address Autoconfiguration (SLAAC) und Stateful Address Configuration.

Das erfindungsgemäße Kommunikationsgerät zur Durchführung eines Verfahrens entsprechend voranstehenden Ausführungen umfasst zumindest eine Sende- und Empfangseinheit zum Empfang von ersten Konfigurationsinformationen, die von durch zumindest einen Router innerhalb eines Teilnetzes an vom jeweiligen Teilnetz umfasste Kommunikationsgeräte übermittelten Routerbekanntgabe-Nachrichten umfasst sind. Dabei umfassen die ersten Konfigurationsinformationen Steuerungsinformationen mit Angaben über durch zumindest einen Konfigurationsserver bereitgestellte zweite Konfigurationsinformationen. Außerdem weist das erfindungsgemäße Kommunikationsgerät eine Konfigurationseinheit, deren Betriebsart entsprechend empfangener Steuerungsinformationen eingestellt ist. Dabei ist das Kommunikationsgerät dazu ausgestaltet und eingerichtet, sich selbständig in Abhängigkeit von der Betriebsart seiner Konfigurationseinheit entsprechend empfangenen ersten bzw. zweiten Konfigurationsinformationen zumindest hinsichtlich Kommunikationsnetzadresse und Domänennamensserver konfigurieren.

Darüber hinaus umfasst das erfindungsgemäße Kommunikationsgerät eine Diagnoseeinheit zur Überprüfung, ob die ersten Konfigurationsinformationen innerhalb des jeweiligen Teilnetzes zueinander konsistente Steuerungsinformationen umfassen. Dabei ist das Kommunikationsgerät dazu ausgestaltet und eingerichtet, ein Vorliegen inkonsistenter Steuerungsinformationen zu signalisieren bzw. protokollieren. Ferner ist das Kommunikationsgerät dazu ausgestaltet und eingerichtet, bei einem Vorliegen inkonsistenter Steuerungsinformationen entsprechend durch einen jeweils vorgegebenen Router übermittelten ersten Konfigurationsinformationen konfiguriert zu werden. Auf diese Weise wird ein instabiler bzw. fehlerhafter Netzbetrieb durch ein Festschreiben der Konfiguration entsprechend einem zuverlässigen Betriebszustand vor Störungseintritt vermieden.

Entsprechend einer bevorzugten Ausgestaltung des erfindungsgemäßen Kommunikationsgeräts ist die Diagnoseeinheit dazu ausgestaltet und eingerichtet, die Betriebsart der Konfigurationseinheit zu steuern. Dies ermöglicht eine besonders zuverlässige Realisierung der vorliegenden Erfindung. Vorzugsweise ist die Diagnoseeinheit dazu ausgestaltet und eingerichtet, während des Vorliegens inkonsistenter Steuerungsinformationen zur Konfiguration des Kommunikationsgeräts keine anderen Routerbekanntgabe-Nachrichten als diejenigen des zumindest einen vor Vorliegen der inkonsistenten Steuerungsinformationen für eine Konfiguration maßgeblichen Routers auszuwerten. Damit können instabile oder fehlerhafte Konfigurationen von Vorneherein ausgeschlossen werden.

Die vorliegende Erfindung wird nachfolgend an einem Ausführungsbeispiel anhand der Zeichnung näher erläutert. Es zeigt
- Figur 1: ein Kommunikationssystem mit zwei einem Teilnetz zugeordneten Default-Routern, bei dem inkonsistente Konfigurationsinformationen Kommunikationsgeräte-seitig signalisiert bzw. protokolliert werden,
- Figur 2: eine alternative Ausführungsvariante, bei der inkonsistente Konfigurationsinformationen Router-seitig signalisiert bzw. protokolliert werden.

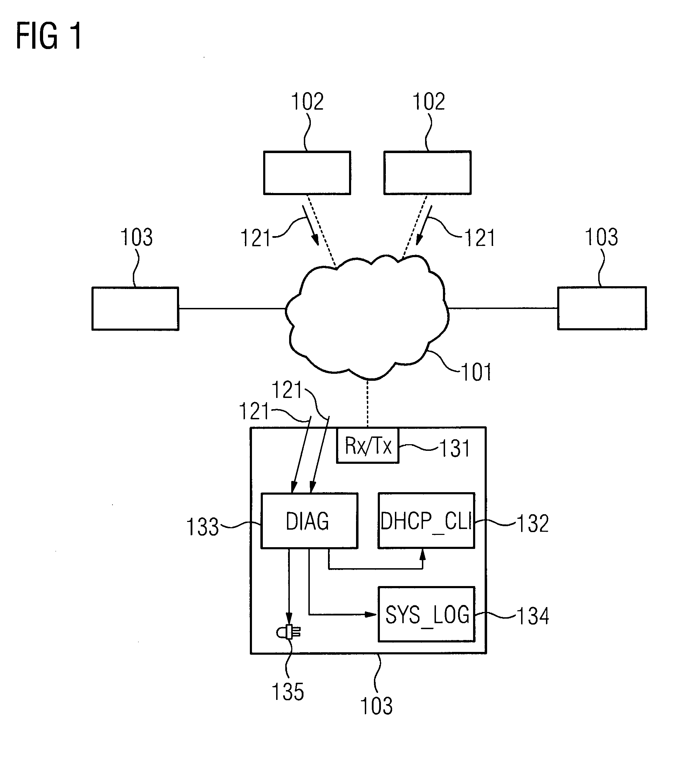

Das in Figur 1 dargestellte Kommunikationssystem umfasst ein Internetprotokoll-basiertes Teilnetz 101 mit zwei Default-Routern 102, die jeweils Router Advertisements 121 als erste Konfigurationsinformationen entsprechend Internet Control Message Protocol, Version 6 an dem Teilnetz 101 zugeordnete Kommunikationsgeräte 103 übermitteln. Die Router Advertisements 121 umfassen jeweils zumindest ein M-Flag und ein O-Flag als Steuerungsinformationen mit Angaben über zweite Konfigurationsinformationen, die durch DHCPv6-Server (Dynamic Host Configuration Protocol, Version 6) bereitgestellt werden.

Durch das M-Flag (Managed Flag) wird gekennzeichnet, dass durch einen DHCPv6-Server entsprechend Dynamic Host Configuration Protocol, Version 6 zweite Konfigurationsinformationen, die ein Präfix für die Kommunikationsgeräte 103 zur Bildung von Kommunikationsnetzadressen entsprechend Internet Protocol, Version 6 umfassen, an die Kommunikationsgeräte 103 bereitgestellt werden. Demgegenüber wird durch das O-Flag (Other Configuration Flag) gekennzeichnet, dass durch einen DHCPv6-Server entsprechend Dynamic Host Configuration Protocol, Version 6 zweite Konfigurationsinformationen, die Angaben über einen Domänennamensserver umfassen, an die Kommunikationsgeräte 103 bereitgestellt werden. Bei einem nicht gesetzten M-Flag konfigurieren sich die Kommunikationsgeräte 103 hinsichtlich ihrer Kommunikationsnetzadressen selbständig anhand der Router Advertisements 121. Die Router Advertisements 121 umfassen ein IPv6-Präfix, das von den Kommunikationsgeräten 103 zur Bildung ihrer jeweiligen Kommunikationsnetzadresse entsprechend Internet Protocol, Version 6 für eine Stateless Address Autoconfiguration verwendet wird.

Die Kommunikationsgeräte 103 weisen jeweils eine Sende- und Empfangseinheit 131 auf, mittels der die ersten und zweiten Konfigurationsinformationen empfangen werden, sowie einen DHCPv6-Client 132 als Konfigurationseinheit. Die Betriebsart des DHCPv6-Client 132 wird entsprechend empfangener Steuerungsinformationen eingestellt. Die Kommunikationsgeräte 103 konfigurieren sich selbständig in Abhängigkeit von der Betriebsart ihres DHCPv6-Client 132 entsprechend empfangenen ersten bzw. zweiten Konfigurationsinformationen, zumindest hinsichtlich ihrer Kommunikationsnetzadresse und eines Domänennamensservers zur Auflösung von logischen Namen bzw. Ressourcenbezeichnern in Kommunikationsnetzadressen.

Außerdem umfassen die Kommunikationsgeräte 103 jeweils eine Diagnoseeinheit 133, durch welche die Betriebsart des zugeordneten DHCPv6-Client 132 gesteuert wird. Hierzu überprüft die Diagnoseeinheit 133, ob die ersten Konfigurationsinformationen innerhalb des jeweiligen Teilnetzes zueinander konsistente Steuerungsinformationen umfassen. Dabei werden insbesondere das M-Flag und das O-Flag als Steuerungsinformationen durch die Diagnoseeinheit 133 zur Konsistenzüberprüfung ausgewertet.

Bei einem Vorliegen inkonsistenter Steuerungsinformationen werden die Kommunikationsgeräte 103 entsprechend ersten Konfigurationsinformationen konfiguriert, die durch zumindest einen vor Vorliegen der inkonsistenten Steuerungsinformationen für eine Konfiguration maßgeblichen Router übermittelt werden. Während des Vorliegens inkonsistenter Steuerungsinformationen werden zur Konfiguration des jeweiligen Kommunikationsgeräts 103 keine anderen Router Advertisements 121 als diejenigen ausgewertet, die dem vor Vorliegen der inkonsistenten Steuerungsinformationen für eine Konfiguration maßgeblichen Default-Router 102 zugeordnet sind. Darüber hinaus umfassen die Kommunikationsgeräte 103 im vorliegenden Ausführungsbeispiel jeweils eine Aufzeichnungseinheit 134 und eine Anzeigeeinheit 135, beispielsweise eine Leuchtdiode, um ein Vorliegen inkonsistenter Steuerungsinformationen zu protokollieren bzw. signalisieren.

Zwischen dem DHCPv6-Client 132 und der zugeordneten Diagnoseeinheit 133 ist in den Kommunikationsgeräten 103 jeweils eine dedizierte Schnittstelle vorgesehen. Dies ermöglicht ein schnelles und zuverlässiges Festschreiben bzw. Einfrieren der Betriebsart des DHCPv6-Client 132. Bei einem Einfrieren seiner Betriebsart ignoriert der DHCPv6-Client solange Nachrichten inkonsistenter Default-Router, bis die Diagnoseeinheit 133 wieder Konsistenz meldet.

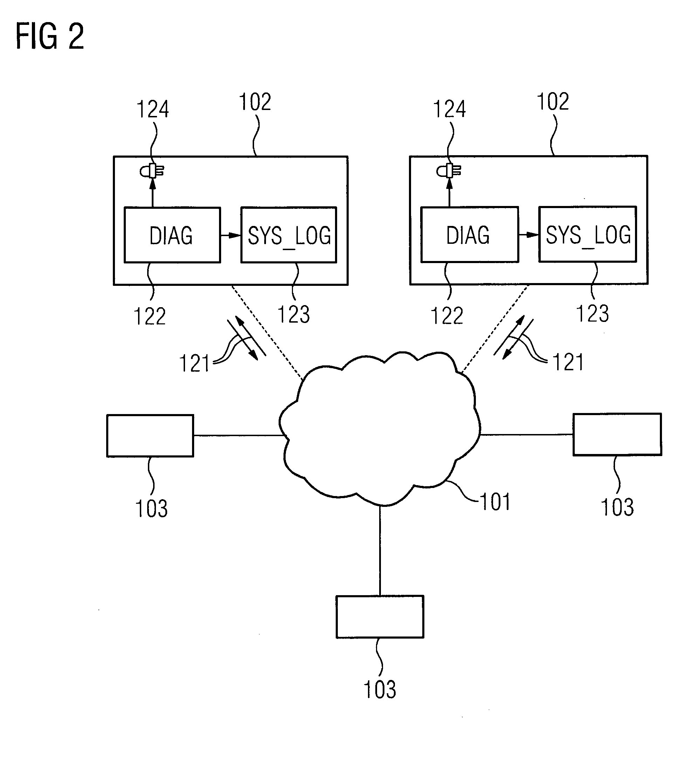

Die in Figur 2 dargestellte alternative Ausführungsvariante unterscheidet sich vom Ausführungsbeispiel gemäß Figur 1 dadurch, dass die Default-Router 102 anstelle der Kommunikationsgeräte 103 jeweils eine Diagnoseeinheit 122, eine Aufzeichnungseinheit 123 sowie eine Anzeigeeinheit 124 umfassen. In diesem Fall wird mittels der Router-seitigen Diagnoseeinheiten 122 überprüft, ob die ersten Konfigurationsinformationen innerhalb des jeweiligen Teilnetzes zueinander konsistente Steuerungsinformationen umfassen. Hierzu überwachen die Default-Router 102 die Router Advertisements 121 der jeweils anderen Default-Router 102. Etwaige Inkonsistenzen werden mittels der Aufzeichnungseinheit 123 und der Anzeigeeinheit 124 des jeweiligen Default-Router 102 protokolliert bzw. signalisiert.

## Patentansprüche

1. Verfahren zur Konfiguration von Kommunikationsgeräten eines industriellen Kommunikationsnetzes, bei dem
- erste Konfigurationsinformationen für die Kommunikationsgeräte mittels Routerbekanntgabe-Nachrichten durch zumindest einen Router innerhalb eines Teilnetzes an vom jeweiligen Teilnetz umfasste Kommunikationsgeräte übermittelt werden,
- die ersten Konfigurationsinformationen Steuerungsinformationen mit Angaben über zweite Konfigurationsinformationen umfassen, die durch zumindest einen Konfigurationsserver bereitgestellt werden,
- die Kommunikationsgeräte jeweils eine Konfigurationseinheit umfassen, deren Betriebsart entsprechend empfangener Steuerungsinformationen eingestellt wird,
- sich die Kommunikationsgeräte selbständig in Abhängigkeit von der Betriebsart ihrer Konfigurationseinheit entsprechend empfangenen ersten und/oder zweiten Konfigurationsinformationen zumindest hinsichtlich Kommunikationsnetzadresse und Domänennamensserver konfigurieren,
- mittels Kommunikationsgeräte- oder Router-seitiger Diagnoseeinheiten überprüft wird, ob die ersten Konfigurationsinformationen innerhalb des jeweiligen Teilnetzes zueinander konsistente Steuerungsinformationen umfassen,
- ein Vorliegen inkonsistenter Steuerungsinformationen jeweils Kommunikationsgeräte- oder Router-seitig signalisiert und/oder protokolliert wird,
- die Kommunikationsgeräte bei einem Vorliegen inkonsistenter Steuerungsinformationen entsprechend ersten Konfigurationsinformationen konfiguriert werden, die durch zumindest einen vor Vorliegen der inkonsistenten Steuerungsinformationen für eine Konfiguration maßgeblichen Router übermittelt werden.

2. Verfahren nach Anspruch 1,
bei dem die Diagnoseeinheiten Kommunikationsgeräte-seitig vorgesehen sind, und bei dem die Diagnoseeinheit des jeweiligen Kommunikationsgeräts die Betriebsart der Konfigurationseinheit des Kommunikationsgeräts steuert.

3. Verfahren nach einem der Ansprüche 1 oder 2,
bei dem während des Vorliegens inkonsistenter Steuerungsinformationen zur Konfiguration des jeweiligen Kommunikationsgeräts keine anderen Routerbekanntgabe-Nachrichten als diejenigen des zumindest einen vor Vorliegen der inkonsistenten Steuerungsinformationen für eine Konfiguration maßgeblichen Routers ausgewertet werden.

4. Verfahren nach einem der Ansprüche 1 bis 3,
bei dem die Routerbekanntgabe-Nachrichten entsprechend Internet Control Message Protocol, Version 6 übermittelte Router Advertisements sind, die ein M-Flag und ein O-Flag umfassen, die als Steuerungsinformationen durch die Diagnoseeinheiten zur Konsistenzüberprüfung ausgewertet werden.

5. Verfahren nach Anspruch 4,
bei dem durch das M-Flag gekennzeichnet wird, dass durch einen Konfigurationsserver entsprechend Dynamic Host Configuration Protocol, Version 6 zweite Konfigurationsinformationen, die ein Präfix für die Kommunikationsgeräte zur Bildung von Kommunikationsnetzadressen entsprechend Internet Protocol, Version 6 umfassen, an die Kommunikationsgeräte bereitgestellt werden.

6. Verfahren nach einem der Ansprüche 4 oder 5,
bei dem sich die Kommunikationsgeräte bei einem nicht gesetzten M-Flag hinsichtlich ihrer Kommunikationsnetzadressen selbständig anhand der ersten Konfigurationsinformationen konfigurieren, wobei die Router Advertisements als erste Konfigurationsinformationen ein Präfix umfassen, das von den Kommunikationsgeräten zur Bildung ihrer jeweiligen Kommunikationsnetzadresse entsprechend Internet Protocol, Version 6 für eine Stateless Address Autoconfiguration verwendet wird.

7. Verfahren nach einem der Ansprüche 4 bis 6,
bei dem durch das O-Flag gekennzeichnet wird, dass durch einen Konfigurationsserver entsprechend Dynamic Host Configuration Protocol, Version 6 zweite Konfigurationsinformationen, die Angaben über einen Domänennamensserver umfassen, an die Kommunikationsgeräte bereitgestellt werden.

8. Kommunikationsgerät zur Durchführung eines Verfahrens nach einem der Ansprüche 1 bis 7 mit
- zumindest einer Sende- und Empfangseinheit zum Empfang von ersten Konfigurationsinformationen, die von durch zumindest einen Router innerhalb eines Teilnetzes an vom jeweiligen Teilnetz umfasste Kommunikationsgeräte übermittelten Routerbekanntgabe-Nachrichten umfasst sind, wobei die ersten Konfigurationsinformationen Steuerungsinformationen mit Angaben über durch zumindest einen Konfigurationsserver bereitgestellte zweite Konfigurationsinformationen umfassen,
- einer Konfigurationseinheit, deren Betriebsart entsprechend empfangener Steuerungsinformationen eingestellt ist, wobei das Kommunikationsgerät dazu ausgestaltet und eingerichtet ist, sich selbständig in Abhängigkeit von der Betriebsart seiner Konfigurationseinheit entsprechend empfangenen ersten und/oder zweiten Konfigurationsinformationen zumindest hinsichtlich Kommunikationsnetzadresse und Domänennamensserver konfigurieren,
- einer Diagnoseeinheit zur Überprüfung, ob die ersten Konfigurationsinformationen innerhalb des jeweiligen Teilnetzes zueinander konsistente Steuerungsinformationen umfassen, wobei das Kommunikationsgerät dazu ausgestaltet und eingerichtet ist, ein Vorliegen inkonsistenter Steuerungsinformationen zu signalisieren und/oder protokollieren, und wobei das Kommunikationsgerät ferner dazu ausgestaltet und eingerichtet ist, bei einem Vorliegen inkonsistenter Steuerungsinformationen entsprechend durch einen jeweils vorgegebenen Router übermittelten ersten Konfigurationsinformationen konfiguriert zu werden.

9. Kommunikationsgerät nach Anspruch 8,
bei dem die Diagnoseeinheit dazu ausgestaltet und eingerichtet ist, die Betriebsart der Konfigurationseinheit zu steuern.

10. Kommunikationsgerät nach einem der Ansprüche 8 oder 9,
bei dem die Diagnoseeinheit dazu ausgestaltet und eingerichtet ist, während des Vorliegens inkonsistenter Steuerungsinformationen zur Konfiguration des Kommunikationsgeräts keine anderen Routerbekanntgabe-Nachrichten als diejenigen des zumindest einen vor Vorliegen der inkonsistenten Steuerungsinformationen für eine Konfiguration maßgeblichen Routers auszuwerten.
